Europäisches Patentamt

European Patent Office

Office européen des brevets

(19)

(11) Numéro de publication : **0 046 132**
**B1**

(12) FASCICULE DE BREVET EUROPÉEN

(45) Date de publication du fascicule du brevet :
13.03.85

(51) Int. Cl.⁴ : **B 60 S 3/06**

(21) Numéro de dépôt : 81430026.5

(22) Date de dépôt : 31.07.81

(54) Installation de lavage de véhicules automobiles.

(30) Priorité : 13.08.80 FR 8018026

(43) Date de publication de la demande :
17.02.82 Bulletin 82/07

(45) Mention de la délivrance du brevet :
13.03.85 Bulletin 85/11

(84) Etats contractants désignés :
AT BE CH DE GB IT LI LU NL SE

(56) Documents cités :
BE-A- 750 660
DE-B- 1 787 014
FR-A- 2 135 910
FR-A- 2 405 163
US-A- 3 881 208

(73) Titulaire : Achdjibachian, Haroutioun
215 avenue des Olives
F-13013 Marseille (FR)

(72) Inventeur : Achdjibachian, Haroutioun
215 avenue des Olives
F-13013 Marseille (FR)

(74) Mandataire : Marek, Pierre
32, rue de la Loge
F-13002 Marseille (FR)

## Description

L'invention concerne des perfectionnements aux installations de lavage de véhicules automobiles.

De manière avantageuse, quoique nullement limitative, ces améliorations sont applicables aux installations de lavage automatique, par exemple du genre comprenant une ossature mobile en forme de portique agencée de manière à pouvoir se déplacer sur un chemin de roulement et de guidage approprié, d'une extrémité à l'autre d'un véhicule stationnant dans l'axe d'avancement du portique mobile, sur une aire de lavage délimitée, latéralement, par les montants de ce dernier, ledit portique étant communément doté de deux brosses rotatives latérales disposées verticalement ou sensiblement, d'une brosse rotative horizontale, d'un équipement pour la projection du ou des liquides de lavage et, dans certains cas, d'une soufflerie de séchage.

En outre, dans la plupart des installations de ce genre, les brosses verticales sont assujetties à des moyens grâce auxquels elles peuvent s'écarter ou se rapprocher l'une de l'autre, dans un plan perpendiculaire au mouvement relatif entre le portique et le véhicule se trouvant sur l'aire de lavage, de façon à frotter avec une pression convenable sur les surfaces latérales dudit véhicule, en s'adaptant à sa largeur, ou pour se placer contre les surfaces frontales ou postérieures de ce dernier avec la force de frottement nécessaire.

Il est connu (FR-A-2 405 163) de suspendre, de manière autonome, chaque brosse verticale du couple de brosses verticales de l'installation, à un côté mobile d'un parallélogramme articulé horizontal ou sensiblement horizontal dont un côté fixe, opposé au côté mobile, est constitué par une portion de la traverse supérieure du portique de l'installation. D'autre part, suivant ce mode d'exécution, chaque brosse verticale est montée de manière pendulaire dans un berceau de suspension, avec une latitude de libre oscillation dans un plan vertical transversal, au moyen du carter-support contenant le palier dans lequel tourillonne l'extrémité supérieure de l'arbre de ladite brosse.

Grâce à ces dispositions, chaque brosse est dotée d'une autonomie totale de détection et de translation, de sorte qu'il n'est pas indispensable de centrer parfaitement le véhicule sur l'aire de lavage. De plus, le montage pendulaire des brosses sur des supports en parallélogrammes, leur permettent une régularité et une souplesse de détection des formes verticales et latérales des véhicules et ce en pression constante, grâce auxquelles on obtient un brossage efficace et parfait des carrosseries desdits véhicules.

Toutefois, on s'est aperçu que lorsque les brosses verticales se trouvent rapprochées à l'avant ou à l'arrière du véhicule stationnant sur l'aire de lavage, le mouvement du portique en direction du véhicule peut se traduire, notamment lors de la mise en rotation des brosses, par un appui trop important de ces dernières sur les surfaces frontales ou postérieures dudit véhicule.

Conformément aux caractéristiques connues du préambule de la revendication 1 du présent brevet, on a déjà proposé de suspendre, de manière autonome, chaque brosse verticale du couple de brosses verticales de ce type d'installation avec une aptitude d'inclinaison dans des plans quelconques, soit au moyen d'articulation à cardan (BE-A-750 660), soit à l'aide de ressorts (DE-B2-1 787 014), soit au moyen d'articulation à cardan et de ressorts (US-A-3 881 208), aussi bien pour « absorber » les irrégularités de surface des flancs des véhicules que pour amortir le choc initial desdites brosses verticales contre les parties frontale et arrière de ces derniers.

Toutefois, les dispositifs de suspension utilisant une articulation à cardan ont pour grave inconvénient de soumettre la brosse suspendue à une projection en direction de l'extérieur, à partir du point d'articulation, sous l'effet de la force centrifuge, lors de son entraînement en rotation. Tout en tournant sur lui-même, l'axe de la brosse effectue, sous l'effet de la force centrifuge, une rotation engendrant un cône de révolution, laquelle, même en ayant son amplitude limitée par une cage (BE-A-750 660) ou par des ressorts (US-A-3 881 208), a notamment pour conséquences néfastes : une rotation bruyante de la brosse, un appui irrégulier de cette dernière sur la carrosserie du véhicule en cours de lavage et une usure rapide de l'articulation de suspension.

D'autre part, les dispositifs de suspension utilisant seulement des ressorts ont pour importants défauts :

— d'engendrer des pressions très irrégulières de la brosse sur la carrosserie du véhicule en cours de lavage, suivant les degrés d'inclinaison de ladite brosse et de compression ou d'étirement des ressorts de suspension ;

— de provoquer des retours brusques et des oscillations de la brosse sous l'action des ressorts ;

— d'avoir une durée de fonctionnement très limitée, en raison de la déformation rapide des ressorts.

Un objet de la présente invention est de remédier aux inconvénients des dispositifs actuels de suspension autonome des brosses verticales des installations de lavage du genre susmentionné.

Ce résultat est obtenu grâce à un dispositif de suspension selon l'invention, suivant lequel chaque brosse du couple de brosses verticales est suspendue de manière autonome, au moyen d'un axe prenant appui, par l'intermédiaire de ses extrémités ou pivots opposés, dans le fond de deux coulisses verticales portées par les parois longitudinales opposées d'un berceau de suspension.

Grâce à ce mode de suspension particulier, chaque brosse verticale est suspendue, de façon connue, avec une liberté de basculement autonome dans deux plans verticaux perpendiculaires, à savoir : d'une part, dans un plan transversal à l'axe d'avancement du portique, et, d'autre part, dans un plan parallèle audit axe. Chaque brosse verticale a ainsi une autonomie lui permettant d'atteindre les surfaces latérales des véhicules avec une pression régulière et souple, dans toutes les directions ou s'exerce son appui, c'est-à-dire aussi bien sur les flancs desdits véhicules que sur leurs surfaces avant et arrière, lors d'un cycle de lavage. D'autre part, le retour des brosses en position verticale s'effectue sans brusquerie et sans mouvement oscillatoire néfaste.

Les buts, caractéristiques et avantages susmentionnés de l'invention ressortiront mieux de la description qui suit et des dessins annexés dans lesquels :

La figure 1 est une vue en plan illustrant les moyens de montage pendulaire et autonome d'une brosse verticale dans un berceau de suspension constituant l'un des côtés d'un parallélogramme déformable.

La figure 2 est une vue en coupe verticale suivant la ligne 2-2 de la figure 1 ; le tracé en traits interrompus illustre le basculement de la brosse dans un plan vertical parallèle à l'axe de progression du portique.

La figure 3 est une vue en coupe verticale suivant la ligne 3-3 de la figure 1 ; le tracé en traits interrompus illustre le pivotement de la brosse en direction de l'extérieur du portique, dans un plan vertical perpendiculaire à l'axe de progression de ce dernier.

La figure 4 est une vue de face de l'une des coulisses dans laquelle est logé l'un des pivots de la brosse.

La figure 5 est une vue en coupe suivant la ligne 5-5 de la figure 4.

On se réfère auxdits dessins pour décrire un exemple d'exécution intéressant, de la suspension pendulaire des brosses verticales faisant l'objet du présent brevet.

Comme indiqué précédemment, l'installation de lavage de véhicules automobiles à laquelle sont avantageusement applicables les perfectionnements visés par le présent brevet comprend, de manière connue en soi, un bâti en forme de portique constitué de deux montants latéraux rigidement assemblés au moyen d'une traverse horizontale supérieure ; la base de cet ensemble mobile étant équipée d'organes de roulement permettant son déplacement alternatif sur un chemin de roulement par exemple formé par des rails installés sur le sol ou autre plan horizontal.

Ce portique mobile porte deux brosses verticales et une brosse horizontale, ainsi qu'un équipement permettant de projeter le ou les liquides de lavage sur la carrosserie des véhicules lesquels stationnent, durant l'opération de nettoyage, dans l'axe d'avancement dudit portique dont les divers organes ou équipements connus n'entrant pas dans le cadre du présent brevet, ne seront pas décrits pour ne pas compliquer et alourdir inutilement la description et les dessins.

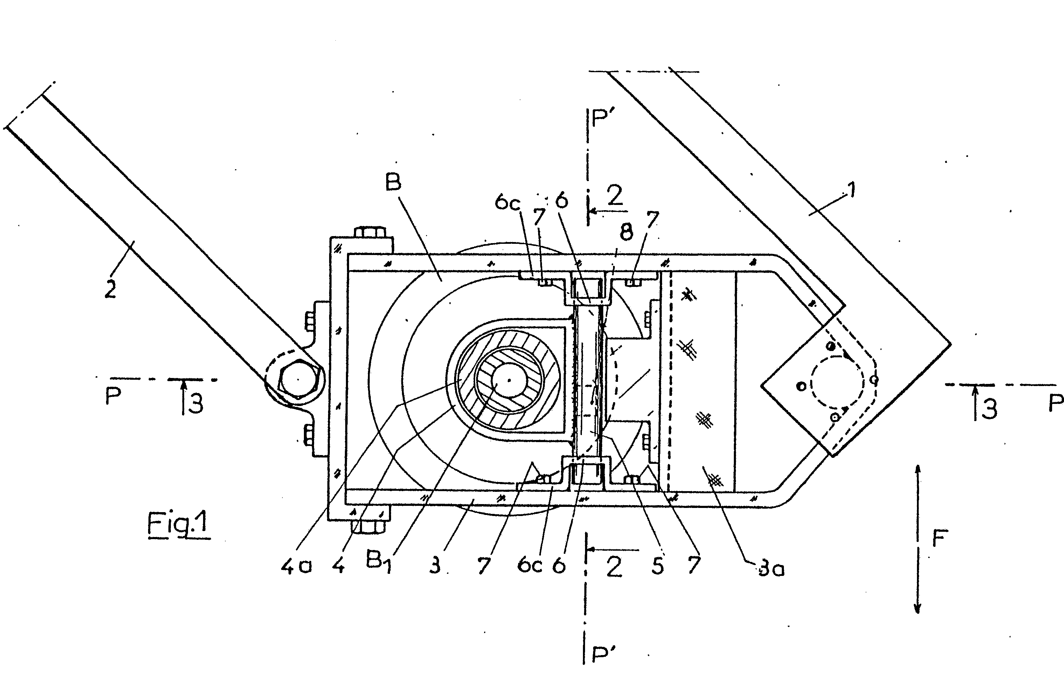

On a seulement illustré, aux figures 1 à 3, les moyens de suspension pendulaire de l'une des brosses verticales B, étant rappelé qu'une installation de lavage comporte généralement deux brosses verticales disposées symétriquement.

Selon l'invention, chaque brosse B du couple de brosses verticales est suspendue, de manière indépendante, avec une latitude de basculement autonome dans deux plans verticaux perpendiculaires. En outre, chacune desdites brosses verticales est suspendue, de manière pendulaire, à un support autonome constitué par un parallélogramme articulé, ou autre quadrilatère déformable, disposé horizontalement ou sensiblement horizontalement.

Chaque parallélogramme déformable horizontal constituant un support autonome pour l'une des brosses verticales, comprend deux bras ou paires de bras 1 et 2 articulés, par l'une de leurs extrémités, sur la traverse ou poutre horizontale (non représentée) du portique, dont une portion constitue ainsi le côté fixe dudit parallélogramme. Les extrémités opposées du bras intérieur 1 et du bras extérieur 2, sont articulées sur les extrémités opposées d'un berceau de suspension mobile 3 constituant le quatrième côté du parallélogramme déformable, lequel est disposé dans le même plan horizontal que la traverse du portique.

Chaque brosse verticale B est suspendue, de manière pendulaire et autonome, au berceau 3 de l'un des parallélogrammes articulés horizontaux.

Le carter-support 4 contenant le renvoi d'angle et/ou le palier 4a dans lequel tourillonne l'extrémité supérieure de l'arbre B1 de chaque brosse verticale B, est rigidement solidaire d'un axe 5, par exemple soudé sur un méplat que présente la surface latérale dudit carter-support. L'axe 5 est monté, par ses extrémités opposées formant pivots, avec un certain degré de libre basculement, dans le fond de deux coulisses verticales 6 portées par les parois longitudinales opposées du berceau de suspension 3.

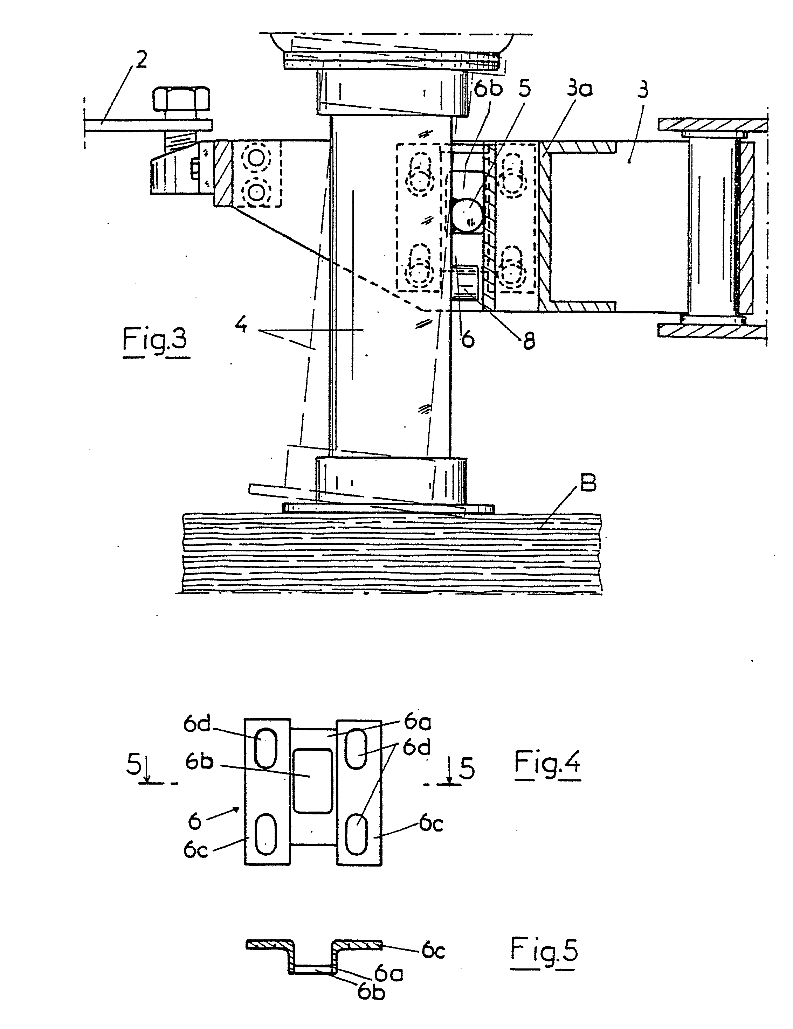

On a représenté, aux figures 4 et 5, l'une de ces coulisses verticales de suspension des brosses B.

Ces coulisses 6 sont constituées par des pièces en forme de pont dont la partie centrale saillante 6a dirigée vers l'intérieur du berceau de suspension 3, comporte une lumière verticale 6b servant de logement à l'une des extrémités ou pivots de l'axe 5, et dont les parties latérales 6c pourvues d'orifices 6d forment des pattes de fixation permettant de les assujettir rigidement, au moyen de vis 7, aux parois longitudinales opposées du berceau de suspension 3.

De la sorte, on comprend que chaque brosse verticale B peut osciller autour de son axe de suspension 5 lequel se trouve disposé parallèlement à l'axe du portique et au sens de progression de ce dernier indiqué par les flèches F de sens contraire de la figure 1.

Autrement dit, chaque brosse verticale peut osciller dans un plan vertical P-P perpendiculaire à l'axe du portique.

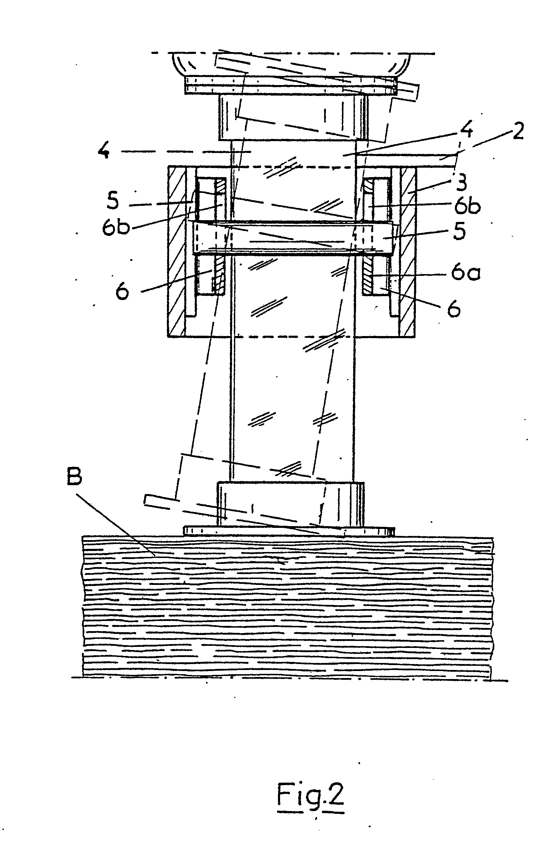

D'autre part, grâce au montage de l'axe de suspension 5 dans les coulisses verticales 6, chaque brosse verticale peut basculer dans un plan vertical P'-P' perpendiculaire au plan P-P, en prenant appui, par l'une des extrémités de l'axe 5, dans le fond de l'une des coulisses verticales, tandis que l'extrémité opposée dudit axe s'élève dans la lumière verticale de la coulisse opposée, comme le montre le tracé en traits interrompus de la figure 2.

De manière connue, l'axe de suspension et de basculement de chaque brosse verticale a une position excentrée en direction du plan médian du portique, par rapport à l'axe de rotation de ladite brosse. Ce décalage a pour effet de donner une inclinaison de la brosse dont l'axe forme un angle par rapport à la verticale, dans la position de repos (cette disposition n'a pas été illustrée sur le dessin du présent brevet, la brosse étant représentée en position de travail à la figure 3). Le rappel des brosses verticales dans la position de repos, en dehors des périodes de fonctionnement de l'installation, est favorisé par le fait que le moteur assurant la rotation de chacune d'elles, est placé à la manière d'un contrepoids, sur le côté extérieur de l'arbre ou axe de rotation de ladite brosse, c'est-à-dire du côté opposé à l'axe de suspension et de basculement 5 de cette dernière.

Une butée 8 portée par le méplat du carter-support 4 et venant en appui contre une traverse 3a du berceau de suspension 3, s'oppose au basculement de la brosse en direction du plan médian du portique, au-delà de la position inclinée de repos. Par contre, ladite brosse peut basculer librement, en cours de travail, en direction de l'extérieur du portique.

On conçoit que les brosses verticales ainsi suspendues peuvent être déplacées de manière indépendante l'une de l'autre, sans effort, d'une position proche du plan médian du portique dans laquelle elles se rejoignent, à une position extérieure extrême voisine des montants dudit portique, et vice versa, en décrivant une trajectoire courbe en forme d'arc de cercle.

On comprend bien le fonctionnement, l'intérêt et les avantages de l'installation de lavage perfectionnée qui vient d'être décrite.

La voiture automobile ou autre véhicule à nettoyer est amenée sur l'aire de lavage et, comme indiqué précédemment, il n'est pas indispensable qu'elle soit parfaitement centrée sur l'axe de translation du portique dont les brosses se trouvent écartées devant ledit véhicule et occupent, au repos, une position inclinée.

Lors de la mise en fonctionnement de l'installation commandée et contrôlée manuellement par un opérateur ou automatiquement par l'introduction d'une pièce de monnaie ou d'un jeton dans un monnayeur ou autre mécanisme de contact, les rampes équipées de gicleurs mouillent abondamment le véhicule et les brosses avec le shampooing ou autre produit liquide de lavage, pendant que les deux brosses verticales se rapprochent vers le centre du portique où elles se rejoignent et que la brosse horizontale descend du haut vers son point le plus bas, permettant le départ de la translation dudit portique.

Le mouvement de rotation place les brosses en position verticale et, lorsque la pression exercée sur l'avant du véhicule, par suite de l'avance du portique, est suffisante, lesdites brosses verticales s'écartent d'elles-mêmes souplement, en nettoyant la totalité des surfaces frontales dudit véhicule. Si cette pression dépasse un certain seuil, les brosses verticales basculent instantanément et souplement, indépendamment l'une de l'autre, dans le plan vertical P'-P' parallèle à l'axe du portique, de sorte que leur axe ne subit aucun effort de torsion et que les surfaces avant du véhicule et les accessoires portés par ces surfaces ne supportent aucun frottement excessif susceptible de les endommager ou de les érafler.

Le portique poursuivant sa progression, les brosses verticales contournent les angles avant de la voiture et frottent ses surfaces latérales, de l'extrémité antérieure à l'extrémité postérieure de cette dernière.

Les brosses verticales étant suspendues et déplacées indépendamment l'une de l'autre, elles exercent une pression uniforme et constante sur la carrosserie du véhicule, même si ce dernier n'est pas parfaitement centré sur l'axe de translation du portique.

En outre, si les côtés du véhicule (ou l'un d'entre eux seulement) comportent une ou plusieurs saillies, la ou les brosses verticales se déplacent automatiquement vers l'extérieur lors de la rencontre de la ou desdites saillies, en exerçant toujours un frottement de force constante sur la carrosserie du véhicule, quelle que soit la forme de ses surfaces latérales.

De plus, si une saillie de la carrosserie se trouve disposée en débordement de la génératrice intérieure de contact du cylindre de friction constitué par l'une des brosses verticales rotatives placée en position extérieure extrême, ladite brosse bascule automatiquement et souplement en direction de l'extérieur du portique, en supprimant ainsi tout risque d'endommagement de ladite carrosserie.

Lorsque les brosses verticales atteignent l'arrière du véhicule, elles en contournent les angles et se rapprochent, jusqu'à leur jonction, en nettoyant les surfaces postérieures dudit véhicule.

Au terme du cycle aller du lavage, le sens de rotation des brosses verticales est inversé et le portique repart en sens opposé, tandis que lesdites brosses frottent, dans l'ordre contraire, sur les surfaces déjà lavées.

De la manière indiquée précédemment, si le contact des brosses verticales avec les surfaces arrière du véhicule s'opère avec une pression dépassant le seuil souhaitable, lesdites brosses basculent souplement, indépendamment l'une de l'autre, dans le plan vertical P'-P' parallèle à l'axe du portique et au sens de progression de ce dernier.

Lorsque la pression s'exerçant dans la direction longitudinale cesse, l'extrémité soulevée de l'axe 5 retombe dans le fond de la fente 6b de la coulisse 6 concernée, sans qu'il en résulte un mouvement oscillatoire perturbateur.

On a décrit une application très intéressante des perfectionnements selon l'invention, aux machines de lavage de véhicules comportant un portique mobile ; il est bien évident cependant que cette destination n'est pas limitative. L'agencement revendiqué peut, en effet, par exemple, équiper des installations le lavage comportant un bâti fixe, tandis que le véhicule à nettoyer est déplacé par l'intermédiaire de moyens connus à travers ledit bâti en forme de portique.

## Revendications

1. Installation de lavage de véhicules automobiles et, par exemple, installation du genre comprenant une ossature mobile en forme de portique agencée de manière à pouvoir se déplacer sur un chemin de roulement et de guidage approprié, d'une extrémité à l'autre d'un véhicule stationnant dans l'axe d'avancement dudit portique mobile lequel est notamment équipé de deux brosses rotatives verticales (B) mobiles transversalement, de façon à pouvoir être pressées contre la surface de la carrosserie dudit véhicule, et suivant laquelle chaque brosse (B) du couple de brosses verticales est suspendue de manière indépendante, avec une liberté de basculement autonome dans deux plans verticaux perpendiculaires, soit, d'une part, dans un plan vertical (P-P) transversal à l'axe de progression du portique et, d'autre part, dans un plan vertical (P'-P') parallèle audit axe, caractérisée en ce que chaque brosse (B) du couple de brosses verticales est suspendue, au moyen d'un axe (5) prenant appui, par l'intermédiaire de ses extrémités ou pivots opposés, dans le fond de deux coulisses verticales (6) portées par les parois longitudinales opposées d'un berceau de suspension (3).

2. Installation de lavage de véhicules automobiles selon la revendication 1, caractérisée en ce que ledit axe de suspension (5) est rigidement solidaire d'un carter-support (4) contenant un palier (4a) dans lequel tourillonne l'extrémité supérieure de l'arbre (B1) de la brosse verticale (B).

3. Installation de lavage de véhicules automobiles suivant la revendication 1, caractérisée en ce que chaque coulisse (6) est constituée par une pièce en forme de pont dont la partie centrale saillante (6a) dirigée vers l'intérieur du berceau de suspension (3), comporte une lumière verticale (6b) servant de logement à l'une des extrémités ou pivots de l'axe de suspension (5) de la brosse.

4. Installation de lavage de véhicules automobiles suivant l'une quelconque des revendications 1 à 3, caractérisée en ce que chaque brosse verticale (B) est suspendue, de manière autonome, aux bras articulés (1, 2, 3) d'un support indépendant. Formant parallélogramme déformable, disposé sensiblement horizontalement.

5. Installation de lavage de véhicules automobiles selon la revendication 4, caractérisée en ce que le côté mobile compris entre les deux bras articulés (1, 2) forme le berceau de suspension (3) de la brosse.

## Claims

1. Washing installation for automobile vehicles and, for example, an installation of the kind comprising a movable frame in the shape of a portico arranged in such a manner as to be able to move along an appropriate rolling and guiding track, from one end to the other of a vehicle standing in the line of advancement of the said movable portico which is in particular equipped with two rotary vertical brushes (B) movable transversely, in such a manner as to be able to be pressed against the surface of the bodywork of the said vehicle, and according to which each brush (B) of the pair of vertical brushes is suspended in independent manner, with a freedom of autonomous tilting in two perpendicular vertical planes, both, on the one hand, in a vertical plane (P-P) transverse to the line of progression of the portico and, on the other hand, in a vertical plane (P'-P') parallel to the said line, characterised in that each brush (B) of the pair of vertical brushes is suspended, by means of a shaft (5) resting, by its opposite ends or pivots, in the base of two vertical slideways (6) carried by the opposed longitudinal walls of a suspension cradle (3).

2. Washing installation for automobile vehicles according to claim 1 characterised in that the said suspension shaft (5) is rigidly fast with a support housing (4) containing a bearing (4a) in which rotates the upper end of the shaft (B1) of the vertical brush (B).

3. Washing installation for automobile vehicles according to claim 1 characterised in that each slideway (6) is constituted by a member of bridge shape of which the projecting central part (6a) directed towards the interior of the suspension cradle (3) comprises a vertical window (6b) serving to receive one of the ends or pivots of the suspension shaft (5) of the brush.

4. Washing installation for automobile vehicles according to any one of claims 1 to 3, characterised in that each vertical brush (B) is suspended, in autonomous manner, from the articulated arms (1, 2, 3) of an independent support, forming a deformable parallelogram, disposed substantially horizontally.

5. Washing installation for automobile vehicles according to claim 4, characterised in that the movable side comprised between the two pivoted arms (1, 2) forms the suspension cradle (3) of the brush.

## Ansprüche

1. Autowaschanlage, z. B. eine Anlage von der Art, daß sie aus einer beweglichen Tragkonstruktion in Form eines Portalrahmens besteht, der so eingerichtet ist, daß er sich auf einer geeigneten Roll- u. Führungsbahn von einem Ende zum anderen eines in der Vorschubachse des besagten beweglichen Portalrahmens abgestellten Fahrzeugs verschieben kann, welcher insbesondere mit zwei vertikalen, querlaufend beweglichen, drehbaren Bürsten (B) ausgestattet ist, so daß sie gegen die Oberfläche der Karosserie des besagten Fahrzeugs gedrückt werden können, u. bei der jede Bürste (B) des vertikalen Bürstenpaares unabhängig voneinander mit einem eigenständigen Schwenkspielraum in zwei lotrechten Vertikalebenen aufgehängt ist, d. h. einerseits in einer vertikalen Ebene (P-P), quer zur Vorschubachse des Portahlrahmens, u. andererseits in einer vertikalen Ebene (P'-P'), parallel zu besagter Achse, dadurch gekennzeichnet, daß jede Bürste (B) des vertikalen Bürstenpaares an der Hängeachse (5) aufgehängt ist, die mit ihren gegenüberliegenden Enden oder Angelpunkten in der Rückseite von zwei vertikalen Gleitführungen (6) aufliegt, welche durch die einander gegenüberliegenden Längswände einer Kippaufhängung (3) gehalten werden.

2. Autowaschanlage gemäß dem Anspruch 1, dadurch gekennzeichnet, daß die besagte Hängeachse (5) mit einem Trägergehäuse (4) starr verbunden ist, das ein Radiallager (4a) enthält, in welchem sich das obere Ende der Welle (B1) der vertikalen Bürste (B) dreht.

3. Autowaschanlage gemäß dem Anspruch 1, dadurch gekennzeichnet, daß jede Gleitführung (6) aus einem brückenförmigen Stück besteht, dessen hervorspringendes Mittelteil (6a), das zur Innenseite der Kippaufhängung (3)\ ausgerichtet ist, ein vertikales Langloch (6b) besitzt, das zur Aufnahme einer der Enden oder Angelpunkte der Hängeachse (5) der Bürste dient.

4. Autowaschanlage gemäß einem der Ansprüche 1-3, dadurch gekennzeichnet, daß jede vertikale Bürste (B) eigenständig an den gelenkig angebrachten Arme (1, 2) eines unabhängigen Supports aufgehängt ist, der ein verformbares Parallelogramm bildet, das in etwa horizontal angeordnet ist.

5. Autowaschanlage gemäß dem Anspruch 4, dadurch gekennzeichnet, daß die sich zwischen den beiden gelenkig angebrachten Armen (1, 2) befindliche, bewegliche Seite, eine Kippaufhängung (3) der Bürste bildet.

Fig.1

Fig.2

Fig.3

2

6b 5 3a 3

4

6 8

B

Fig.4

6d 6a

5 6b 6d

6 5

6c 6c

6c

Fig.5

6c

6a

6b